# EUROPÄISCHE PATENTSCHRIFT

(11) **EP 1 062 130 B1**
(45) Veröffentlichungstag und Bekanntmachung des Hinweises auf die Patenterteilung: **02.05.2003**
(21) Anmeldenummer: 99915526.0
(22) Anmeldetag: 17.02.1999
(51) Int. Cl.: B60R 21/26, B60R 21/20, B60R 21/00

(54) **AIRBAG-SICHERHEITSEINRICHTUNG**
AIRBAG SAFETY DEVICE
DISPOSITIF DE SECURITE A AIRBAGS

(30) Priorität: 14.03.1998 DE 19811180
(43) Veröffentlichungstag der Anmeldung: 27.12.2000
(73) Patentinhaber: Volkswagen Aktiengesellschaft, 38436 Wolfsburg (DE)
(72) Erfinder: SINNHUBER, Ruprecht, D-38518 Gifhorn (DE)
(86) Internationale Anmeldenummer: EP9901039
(87) Internationale Veröffentlichungsnummer: WO99047387

(56) Entgegenhaltungen:
- EP-A- 0 823 356
- WO-A-95/11819
- DE-A- 4 231 522
- DE-U- 29 713 111
- GB-A- 2 005 887
- US-A- 5 072 966
- US-A- 5 172 790
- US-A- 5 234 228

## Beschreibung

Die Erfindung betrifft eine Airbag-Sicherheitseinrichtung, insbesondere Seitenairbag-Sicherheitseinrichtung für die Insassen eines Kraftfahrzeuges nach dem Oberbegriff des Anspruchs 1.

Eine derartige Seitenairbags einschließende Sicherheitseinrichtung ist aus der DE 44 40 258 A1 bekannt. Um bei sehr kurzen Entfaltungszeiten und einem geringen Airbagvolumen eine ausreichende Rückhaltewirkung sicherzustellen, sind die Airbags nach einer ersten Erfindungsvariante so angeordnet, daß der jeweilige Airbag bei einem Kollisionsfall durch eine entsprechend ausgebildete Halte- und Positioniereinrichtung in eine an den jeweiligen Insassen angepaßte Position gebracht wird, bevor er überhaupt oder vollständig entfaltet wird. Nach einer zweiten Erfindungsvariante ist eine entsprechende Unfallsensoreinrichtung so ausgelegt, daß durch Einsatz spezieller Crashsensoren für die das Fahrzeug beaufschlagende Aufprallkraft wenigstens einer der Parameter Richtung, Intensität und Aufprallort bestimmt werden kann. Aus den jeweils erfaßten Parametern können dann in der Steuereinrichtung Rückschlüsse auf das Vorliegen bestimmter Kollisionstypen wie Frontalaufprall, Heckaufprall, Überschlag (Rollover), Offset-Crash oder Schräg- bzw. Eckenschlag gezogen werden. Abhängig vom jeweils erfaßten Kollisionstyp werden im Fahrzeug angeordnete Airbags einzeln oder gesondert, ggf. unter zusätzlicher Berücksichtigung von Sitzbelegungssensoren, von der Steuereinrichtung mit kollisionsspezifischen Charakteristika hinsichtlich des jeweils benötigten Aufbauvolumens und/ oder hinsichtlich der aktuell erforderlichen Aufblasgeschwindigkeit aktiviert. Mit einer derartigen Einrichtung kann die Anzahl der aufzublasenden Airbags einschließlich der Seitenairbags einerseits und die Intensität der Airbagaktivierung andererseits auf das notwendige Minimum beschränkt werden. Bei Bagatellunfällen erfolgt also beispielsweise nur eine langsame Füllung des Airbags auf ein relativ kleines Volumen. Mit dieser Maßnahme wird insbesondere bei den sehr schallkritischen Seiten- und Kopfaibags für die Insassen des verunfallten Fahrzeugs eine erhebliche Lärmreduzierung bewirkt

Auf der Basis der von den Sensoren im Crashfall gelieferten Signale wird durch die Steuereinrichtung zunächst entschieden, welcher oder welche Kombination von Airbags (Lenkrad-Airbag, Beifahrer-Airbag, Kopfairbag, Seitenairbag) jeweils zu aktivieren ist.

Für jeden der Airbags gesondert oder für Gruppen von Airbags gemeinsam werden kollisionsspezifisch unter Berücksichtigung von Richtung, Intensität und Angriffspunkt der Aufprallkraft das aus dem Gasgenerator bereitzustellende Gasvolumen und ergänzend oder alternativ dazu die Aufblasgeschwindigkeit durch die Steuereinrichtung eingestellt.

Aus den gattungbildenden Schriften US 5, 172,290 und GB 2 005 887 ist es bekannt, in Abhängigkeit vom Gurtanlegezustand und/oder der Intensität eines Seitenaufpralls durch mehrstufige Befüllbarkeit des Airbags situationsgerecht für den Fahrzeuginsassen einen ausreichenden Schutz gegen Verletzungen bereitzustellen. Es ist ferner aus der ebenfalls als gattungsbildend anzusehenden US 5,072,966 bekannt, Mehrfachkollisionen von Fahrzeuginsassen innerhalb des Fahrzeuginnenraums so zu berücksichtigen, daß auch auf einer stoßabgewandten Seite des Kraftfahrzeuges im Anschluß an eine Auslösung des Airbags auf einer angestoßenen Seite eine zeitlich verzögerte weitere Auslösung auf der stoßabgewandten Seite vorgenommen wird. In der ebenfalls gattungsbildenden DE-A-195 41 793 wird ein Schaltungsaufbau gezeigt für Airbags, die unter gleichzeitiger oder aufeinanderfolgende Aktivierung ihrer jeweiligen Gasgeneratoren aufblasbar sind.

Die DE-A-196 10 299 zeigt einen steuerbaren Gasgenerator für einen in einem Kraftfahrzeug untergebrachten Airbag, bei dem in Abhängigkeit des jeweiligen Unfallgeschehens die Befüllung des Airbags mit unterschiedlichen Treibladungsmengen erfolgt. Ebenso wie bei den vorgenannten Schriften US 5,172,790 und GB 2 005 887 werden in dieser Entgegenhaltung im Gegensatz zur nicht vorveröffentlichten DE-A-197 05 431 Mehrfachkollisionen oder Fahrzeugüberschläge (Rollover) nicht thematisiert.

Die DE-A-42 31 522 zeigt als Seitenaufprallschutz einen Airbag aus mehreren nebeneinander angeordneten Kammern, die jeweils eine eigene Druckgasversorgung besitzen. Ähnlich wie bei der DE 197 05 431 A1 erfolgt die Befüllung dieser einzelnen Kammern gegebenenfalls durch einen zentralen Gasgenerator, der über ein Ventilsystem an verschiedene Kammern des Airbags angeschlossen ist

Es ist deshalb Aufgabe der Erfindung, eine Airbag-Sicherheitseinrichtung nach dem Oberbegriff des Anspruchs 1 zu schaffen, durch die die Sicherheit der Fahrzeuginsassen bei einer Mehrfach- oder Folgekollision erhöht ist

Diese Aufgabe wird bei einer gattungsgemäßen Airbag-Sicherheitseinrichtung mit den kennzeichnenden Merkmalen des Anspruchs 1 gelöst

Danach ist wenigstens ein Teil der im Kraftfahrzeug angeordneten Airbags mit zwei Gasgeneratoren oder mit einem Gasgenerator, der zwei unabhängig voneinander aktivierbare Treibgassätze aufweist, verbunden. In Abhängigkeit vom Kollisionsfall und -typ sind die Airbags jeweils entweder aus einem Gasgenerator oder einem Treibgassatz, gleichzeitig aus beiden Gasgeneratoren oder Treibgassätzen oder zunächst nur aus einem ersten und bei einer auf die erste Kollision folgenden zweiten Kollision aus dem jeweils zweiten Gasgenerator oder Treibgassatz zur Erhöhung der Standzeit des Airbags befüllbar.

In der DE 44 40 258 A1 ist ausgeführt, daß die Unfallsensoreinrichtung so ausgelegt werden kann, daß durch Einsatz spezieller Crashsensoren für die das Fahrzeug beaufschlagende Aufprallkraft wenigstens einer der Parameter Richtung, Intensität und Aufprallkraft bestimmt werden und in der Steuereinrichtung Rückschlüsse auf das Vorliegen bestimmter Kollisionstypen gezogen werden können und in Folge die dem Kollisionstyp gerecht werdenden Airbags entfaltet werden. Insbesondere durch Einsatz sog. Precrashsensoren (US 40 11 563) und allgemein bekannter Trägheitssensoren (DE 29 23 029 - G 01P 15/04) ist es möglich, auch einen Rollover zu signalisieren und die Seitenairbags auf der stoßabgewandten Seite - oder in Verbindung mit einem Sitzbelegungssensor nur einen Seitenairbag - zusätzlich zu den kollisionsseitig angeordneten Seitenairbags frühzeitig zu befüllen. Auch diese auf der stoßabgewandten Seite angeordneten Airbags sind infolge der Kopplung mit zwei Treibgassätzen oder zwei Gasgeneratoren zur Erhöhung der Standzeit nachbefüllbar. Ein Rollover wird durch die Steuereinrichtung, beispielsweise in Verbindung mi Winkelsensoren, schon vor dem Aufschlag erkannt, so daß die Airbags auf der stoßabgewandten Seite auch vor dem Aufschlag befüllt werden.

Zusätzlich zu der vorhandenen Steuerung der Zündung kann - wie in der DE 44 40 258 A1 beschrieben - kollisionsspezifisch unter Berücksichtigung von Richtung, Intensität und Angriffspunkt der Aufprallkraft das aus dem Gasgenerator bereitzustellende Gasvolumen und ergänzend oder alternativ dazu die Aufblasgeschwindigkeit vorbestimmt werden.

Die Erfindung wird nachstehend anhand zweier Ausführungsbeispiele erläutert. In der Zeichnung zeigen schematisch:
- Fig. 1:: eine Draufsicht auf den Grundriß eines Fahrzeuges mit einer ersten Ausführungsform einer erfindungsgemäßen Airbag-Sicherheitseinrichtung und
- Fig. 2:: eine Draufsicht auf den Grundriß eines Fahrzeuges mit einer zweiten Ausführungsform.

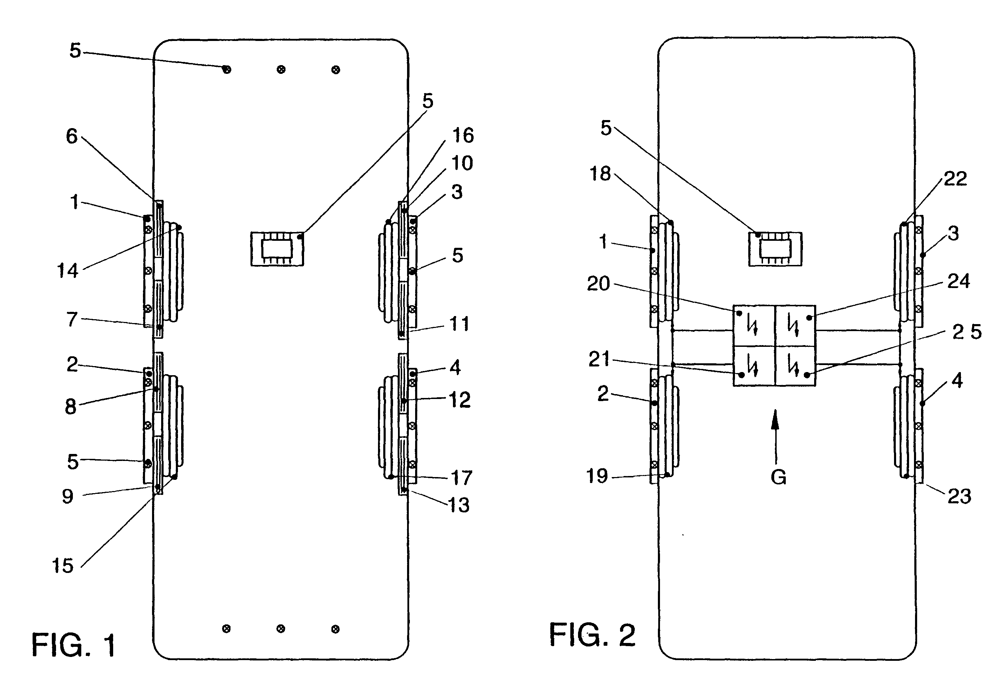

Der in der Fig. 1 dargestellte Grundriß eines Fahrzeuges zeigt die lokale Anordnung von Crashsensoren S, die an den Fahrzeugseiten in sog. Kontaktleisten 1 bis 4 (hierzu beispielsweise die DE 22 12 190 - A1, DE - 28 21 156 oder DE 37 04 331) integriert und am Fahrzeugaufbau befestigt sind. Hinsichtlich möglicher Sensorprinzipien wird hier ausdrücklich auf die Schriften DE 42 41 392 A1, DE 42 41 382 A1 und DE 43 00 653 A1(alle B 60 R 21/32) verwiesen. Insbesondere wird in der letztgenannten Schrift erläutert, wie beispielsweise nach Art einer Kernfeldsteuerung kollisionsspezifisch die Anspruchschwelle der jeweiligen Sensoren variiert werden kann. Diese Einzelsensoren sind über nicht dargestellte Signalleitungen mit einer zentralen Steuereinrichtung 5 verbunden, und diese (5) steht in bekannter Weise mit Gasgeneratoren 6 bis 13 über Zündleitungen (nicht dargestellt) in Wirkverbindung. Die Airbag-Sicherheitseinrichtung weist vier Seiten-Airbags 14 bis 17 auf, denen jeweils zwei Gasgeneratoren 6-7, 8-9, 10-11 und 12-13 zugeordnet sind, die unabhängig voneinander den jeweiligen Airbag 14, 15, 16 und 17 befüllen können.

Die Steuereinrichtung 5 steht derart mit den einem Airbag 14 bis 17 zugeordneten Sensoren S in Wirkverbindung, daß sie bei einer Kollision deren Signale zur Aktivierung nur eines der beiden Gaseneratoren 6 oder 7, 8 oder 9, 10 oder 11 und 12 oder 13 verwertet. Dieser entfaltet den jeweils angeschlossenen Airbag 14 bis 17. Kommt es zu einer zweiten Kollision auf der gleichen Fahrzeugseite im Wirkungsbereich der gleichen Sensoren S, so verwertet die Steuereinrichtung 5 die empfangenen Signale, um den jeweils zweiten Gasgenerator zu aktivieren und den jeweiligen Airbag nachzubefüllen. Führt die erste oder die zweite Kollision zu einem Rollover, werden die auf der dem Stoß abgewandten Seite angeordneten Airbags durch entsprechende Signale der dort angeordneten Sensoren im Zusammenwirken mit der Steuereinrichtung 5 entfaltet, wobei zunächst jeweils nur ein Gasgenerator zur Befüllung gezündet wird. Für den Fall, daß die zweite Kollision auf der Fahrzeugseite erfolgt, die der ersten Kollision abgewandt ist, wird auf dieser der jeweils vorbestimmte erste Gasgenerator gezündet und der angeschlossene Airbag entfaltet. Führt nun diese zweite Kollision zu einem Rollover, wird der jeweils zweite Gasgenerator der Airbags auf der der zweiten Kollision abgewandten Seite gezündet und der jeweilige Airbag auf der Stoßseite nachbefüllt.

Fig. 2 zeigt eine Ausführungsform mit der gleichen Anzahl von Seitenairbags 18, 19; 22, 23. Die zugehörigen Gasgenerator-Treibgassätze 20, 21; 24, 25 sind in einer Gasgeneratoreinheit G zusammengefaßt. Den Airbags 18 und 19 der einen Fahrzeugseite sind gemeinsam 2 Treibgassätze 20 und 21 zugeordnet, den Airbags 22 und 23 der anderen Seite zwei Treibgassätze 24 und 25. Im Unterschied zum Beispiel nach Fig. 1 werden bei dieser Ausführung die auf einer Seite angeordneten Airbags 18 und 19 (oder 22 und 23) bei einer Kollision stets gemeinsam aus einem Gasgenerator 20 (oder 24) befüllt. Folgt eine zweite Kollision werden die schon entfalteten Airbags 18 und 19 (oder 22 und 23) durch Zünden des zweiten Gasgenerators 21 (oder 25) erneut befült. Ein Rollover hat in Abhängigkeit von seiner Richtung entweder das Erst-Befüllen der Airbags, die auf der der ersten Kollision abgewandten Seite angeordnet sind, oder, wenn der Rollover nach der Seite der erste Kollision erfolgt, das Nachbefüllen der Airbags auf der der Kollision zugewandten Seite zur Folge.

## Patentansprüche

1. Airbag-Sicherheitseinrichtung für ein Kraftfahrzeug mit mehreren Airbags und mit diesen verbundenen und durch eine mit Sensoren (S) gekoppelte Steuereinrichtung (5) auslösbaren Gasgeneratoren, wobei die Airbags (16, 17; 22, 23; bzw. 14, 15; 18, 19) in Abhängigkeit von einer *durch Richtung, Intensität und Angriffspunkt der Aufprallkraft bestimmten* Kollisionssituation entfaltbar sind und wenigstens ein Teil der Airbags, insbesondere die Seitenairbags (14 - 17; 18, 19, 22, 23), jeweils mit zwei Gasgeneratoren (6-7, 8-9, 10-11, 12-13) oder mit einem unabhängig voneinander aktivierbare Treibgassätze (20, 21; 24, 25) aufweisenden Gasgenerator zum gemeinsamen oder unabhängig voneinander getrennten Befüllen des jeweils angeschlossenen Airbags in Abhängigkeit von der jeweiligen Kollisionssituation verbunden ist, **dadurch gekennzeichnet, daß** die Steuereinrichtung (5) so ausgelegt ist, daß die Gasgeneratoren (6-7, 8-9, 10-11, 12-13) oder Treibgassätze (6-9; 20, 21; bzw. 10-13; 24, 25) der auf der der Kollision abgewandten Seite angeordneten Seitenairbags (14, 15; 18, 19; bzw. 16, 17; 22, 23) *nach einer ersten Kollision* in Abhängigkeit von *bei einer zweiten Kollision erzeugten* Signalen der angeschlossenen Sensoren (S) zusätzlich zu den Gasgeneratoren oder Treibgassätzen (10-13; 24, 25; oder 6-9; 20, 21) für die kollisionsseitig angeordneten Seitenairbags (16, 17; 22, 23; bzw. 14, 15; 18, 19) aktivierbar sind.

2. Airbag-Sicherheitseinrichtung nach Anspruch 1, **dadurch gekennzeichnet, daß** die Treibgassätze (20, 21; 24, 25) zu einer zentralen Gasgeneratoreinheit (G) zusammengefaßt sind.

3. Airbag-Sicherheitseinrichtung nach Anspruch 1, **dadurch gekennzeichnet, daß** durch die Sensoren (S) der Steuereinrichtung (5) ein Rollover des Kraftfahrzeuges signalisierbar ist

4. Airbag-Sicherheitseinrichtung nach Anspruch 3, **dadurch gekennzeichnet, daß** durch die Steuerinrichtung (5) bei einem Rollover eine Befüllung der Airbags auf der stoßabgewandten Seite vor dem Aufschlag der stoßabgewandten Seite des Kraftfahrzeuges auslösbar ist.

5. Airbag-Sicherheitseinrichtung nach Anspruch 4, **dadurch gekennzeichnet, daß** die auf der stoßabgewandten Seite angeordneten Airbags zur Erhöhung der Standzeit nach Zündung des ersten Gasgenerators bzw. Treibgassatzes durch den zweiten Gasgenerator bzw. Treibgassatz nachbefüllbar sind.

## Claims

1. Airbag safety device for a motor vehicle with a plurality of airbags and gas generators which are connected thereto and can be triggered by a control device (5) coupled to sensors (S), it being possible for the airbags (16, 17; 22, 23 or 14, 15; 18, 19) to be deployed in dependence on a collision situation determined by the direction, intensity and point of action of the impact force, and at least some of the airbags, in particular the side airbags (14 - 17; 18, 19, 22, 23), each being connected to two gas generators (6-7, 8-9, 10-11, 12-13), or to a gas generator having propellant-gas units (20, 21; 24, 25) which can be activated independently of one another, for jointly or separately filling the respectively connected airbag in dependence on the respective collision situation, **characterized in that** the control device (5) is configured such that it is possible for the gas generators (6-7, 8-9, 10-11, 12-13) or propellant-gas units (6-9; 20, 21 or 10-13; 24, 25) of the side airbags (14, 15; 18, 19; or 16, 17; 22, 23) arranged on the side which is directed away from the collision to be activated following a first collision, in dependence on signals from the connected sensors (S) which are produced during a second collision, in addition to the gas generators or propellant-gas units (10-13; 24, 25 or 6-9; 20, 21) for the side airbags (16, 17; 22, 23 or 14, 15; 18, 19) arranged on the collision side.

2. Airbag safety device according to Claim 1, **characterized in that** the propellant-gas units (20, 21; 24, 25) are combined to form a central gas-generator assembly (G).

3. Airbag safety device according to Claim 1, **characterized in that** a rollover of the motor vehicle can be signalled by the sensors (S) of the control device (5).

4. Airbag safety device according to Claim 3, **characterized in that**, during a rollover, the control device (5) can trigger a filling operation of the airbag on the side which is directed away from the shock prior to the impact of that side of the motor vehicle which is directed away from the shock.

5. Airbag safety device according to Claim 4, **characterized in that**, in order to increase the service life, the airbags arranged on the side which is directed away from the shock can be refilled by the second gas generator or propellant-gas unit following ignition of the first gas generator or propellant-gas unit.

## Revendications

1. Dispositif de sécurité à airbags pour un véhicule automobile comprenant plusieurs airbags et des générateurs de gaz connectés à ceux-ci et pouvant être déclenchés par un dispositif de commande (5) accouplé à des capteurs (S), les airbags (16, 17 ; 22, 23 ; respectivement 14, 15 ; 18, 19) pouvant être déployés en fonction d'une situation de collision *déterminée par la direction, l'intensité et le point d'incidence de la force de d'impact* et au moins une partie des airbags, en particulier les airbags latéraux (14 - 17 ; 18, 19, 22, 23), étant raccordée à chaque fois à deux générateurs de gaz (6-7, 8-9, 10-11, 12-13) ou à un générateur de gaz présentant des jeux de gaz propulseurs (20, 21 ; 24, 25) activables indépendamment l'un de l'autre pour le remplissage commun ou séparé indépendamment les uns des autres de chaque airbag respectif raccordé en fonction de la situation de collision respective, **caractérisé en ce que** le dispositif de commande (5) est conçu de telle sorte que les générateurs de gaz (6-7, 8-9, 10-11, 12-13) ou les jeux de gaz propulseurs (6-9 ; 20, 21 ; respectivement 10-13 ; 24, 25) des airbags latéraux (14, 15 ; 18, 19 ; respectivement 16, 17 ; 22, 23) disposés du côté opposé à la collision puissent être activés *après une première collision* en fonction de signaux des capteurs (S) raccordés *générés lors d'une deuxième collision* en plus des générateurs de gaz ou des jeux de gaz propulseurs (10-13 ; 24, 25 ; ou 6-9, 20, 21) pour les airbags latéraux (16, 17 ; 22, 23 ; respectivement 14, 15 ; 18, 19) disposés du côté de la collision.

2. Dispositif de sécurité à airbags selon la revendication 1, **caractérisé en ce que** les jeux de gaz propulseurs (20, 21 ; 24, 25) sont rassemblés pour former une unité centrale de générateur de gaz (G).

3. Dispositif de sécurité à airbags selon la revendication 1, **caractérisé en ce qu'**un retournement du véhicule automobile peut être signalisé par les capteurs (S) du dispositif de commande (5).

4. Dispositif de sécurité à airbags selon la revendication 3, **caractérisé en ce que**, lors d'un retournement, un remplissage des airbags du côté opposé au choc peut être déclenché par le dispositif de commande (5) avant que le côté opposé au choc du véhicule automobile ne soit heurté.

5. Dispositif de sécurité à airbags selon la revendication 4, **caractérisé en ce que** les airbags disposés du côté opposé au choc peuvent être re-remplis par le deuxième générateur de gaz ou le deuxième jeu de gaz propulseurs pour augmenter leur tenue après l'allumage du premier générateur de gaz ou du premier jeu de gaz propulseurs.
